# EUROPEAN PATENT SPECIFICATION

(11) **EP 3 581 422 B1**
(45) Date of publication and mention of the grant of the patent: **16.11.2022**
(21) Application number: 18177883.8
(22) Date of filing: 14.06.2018
(51) Int. Cl.: B60K 35/00, B60K 37/02, G01D 11/26

(54) **INSTRUMENT PANEL ASSEMBLY**
ARMATURENTAFELBAUGRUPPE
ENSEMBLE DE TABLEAU DE BORD

(43) Date of publication of application: 18.12.2019
(73) Proprietor: Aptiv Technologies Limited, St. Michael (BB)
(72) Inventor: BORON, Artur, 32-070 Czernichów (PL); SZOSTEK, Grzegorz, 32-084 Morawica (PL); MELFRIED, Sebastian, 30-838 Kraków (PL)
(74) Representative: Vigand, Philippe

(56) References cited:
- EP-A2- 1 013 496
- US-A- 6 018 131
- US-B2- 7 841 293

## Description

### TECHNICAL FIELD OF THE INVENTION

The invention relates to an instrument panel assembly for displaying vehicle information and more particularly to an assembly for damping shocks on the transparent lens of the instrument panel assembly.

### BACKGROUND OF THE INVENTION

Instrument panel assembly for displaying vehicle information is generally equipped with display. Robustness requirements from car makers on shock resistance of the display are important. Generally, displays and other panel information devices are protected by a transparent lens overlaying said panel information devices. Test on dropping steel ball according to recent car maker requirements on usual transparent lens made of poly methyl methacrylate (PMMA) fails on avoiding breaking of displays.

Air gap between transparent lens and displays is not any more sufficient to protect the displays as shock absorption is not enough to avoid damage on the display. The usage of more robust transparent lens, as for instance transparent lens made of Polycarbonate (PC) is not a solution as this material have worse optical performance and lower scratch resistance.

EP1013496A3 discloses an indicating instrument for a motor vehicle having a housing with a front frame holding a cover pane and an elastic spacing element arranged between the cover pane and the front frame.

US6018131A discloses a control assembly having a display lens that covers a display on a circuit board assembly with the distal ends of four legs of the display lens engaging four pads on a switch pad that is formed of a resilient material such as rubber.

US7841293B2 discloses another display instrument for a motor vehicle having a housing retaining a cover disk and a connector element connecting the housing and the cover disk.

It is therefore important to propose a new solution to increase safety for pedestrian.

### SUMMARY OF THE INVENTION

According to an embodiment of the invention, an instrument panel assembly for displaying vehicle information is defined in claim 1.

The lens retainer may comprise an elastic member arranged in direct contact bearing engagement with the rear surface of the transparent lens. The lens retainer may comprise an elastic member arranged in bearing engagement with the panel holder.

More generally, the elastic member may comprise an elastic shape made in one piece with the lens retainer.

The elastic member may comprise a foam gasket glued with the lens retainer. The elastic member may comprise an elastomer gasket.

The bottom axial end of the lens retainer and the panel holder may jointly comprise vertical sliding guiding means so as to ensure only a vertical motion of the lens retainer during shocks absorption on the transparent lens..

### BRIEF DESCRIPTION OF THE DRAWINGS

Other features, objects and advantages of the invention will become apparent from reading the detailed description that follows, and the attached drawings, given by way of example and in which:
- Figure 1 is a perspective schematic view of an instrument panel assembly according to a first embodiment;
- Figure 2 is an exploded view of the instrument panel assembly of figure 1;
- Figure 3 is a bottom perspective view of the lens retainer of an instrument panel assembly according to a second embodiment;
- Figure 4 is a perspective schematic view of an instrument panel assembly according to a third embodiment;
- Figure 5 is a transversal cross-section view of the instrument panel assembly of figure 4;
- Figure 6 is a bottom perspective view of the lens retainer of an instrument panel assembly according to a fourth embodiment;
- Figure 7 is a perspective view of the panel holder of the instrument panel assembly according to the fourth embodiment.

### DETAILED DESCRIPTION OF THE PREFFERED EMBODIMENTS

In order to facilitate the description, and in a no limiting manner, a vertical axis V is defined. "Low" and "High", "Above" and "Below", "Lower" and "Higher", "Top" and "Bottom" orientations are defined in the vertical direction.

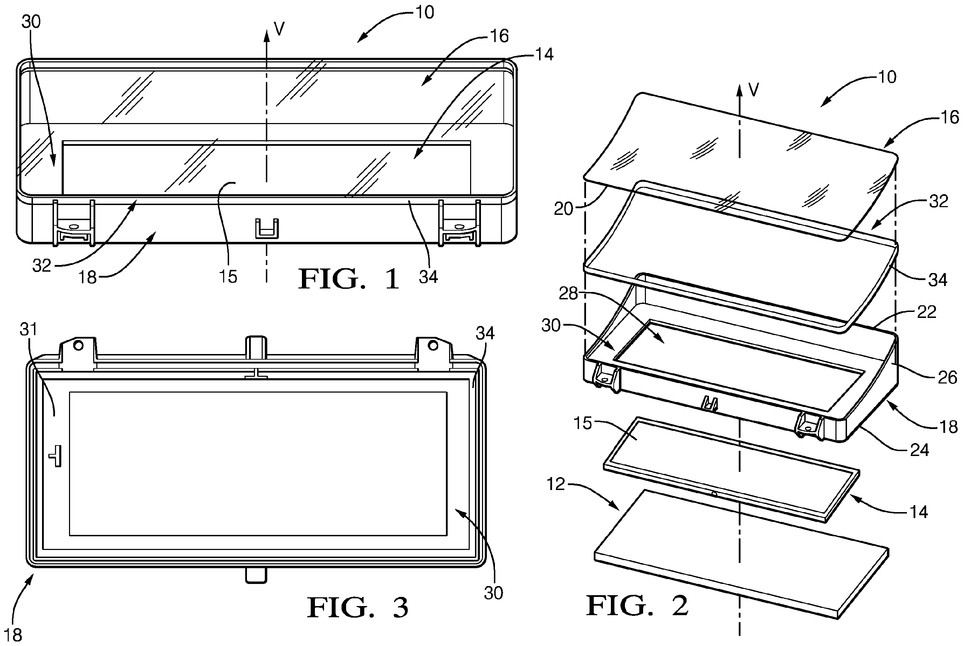

According to figure 1 and figure 2, a first embodiment of an instrument panel assembly 10 for displaying vehicle information is illustrated. The instrument panel assembly 10 comprises a panel holder 12 and a panel information device 14. A transparent lens 16 overlying the panel information device 14 is arranged on top of a lens retainer 18.

More particularly, the instrument panel assembly 10 is a digital dashboard of a motor vehicle that may digitally indicate the speed of the vehicle, the fuel level and other information useful for a driver of the vehicle. According to the embodiment, the panel information device 14 is a display 15. The panel information device 14 is arranged on the panel holder 12. The panel holder 12 may comprise fastened means to be fixedly mounted in a cabin of the vehicle.

In order to arrange the transparent lens 16 distant from the panel information device 12, the lens retainer 18 extends vertically from the rear surface 20 of the transparent lens 16 to the panel holder 12. More particularly, the lens retainer 18 extends vertically from its top axial end 22 to its bottom axial end 24 such that it comprises a tubular part 26 forming a cavity 28 arranged between the transparent lens 16 and the panel information device 14, said panel information device 14 being arranged in vis a vis of the transparent lens 16.

The top axial end 22 of the lens retainer is fixed to the rear surface 20 of the transparent lens 16. The transparent lens 16 is generally a plastic lens. The transparent lens 16 may by welded, glued or clipped onto the top axial end 22 of the lens retainer 18.

The bottom axial end 24 of the lens retainer 18 abuts on the panel holder 12. More particularly, the bottom axial end 24 of the lens retainer 18 forms a base 30 of the lens retainer 18, said base 30 bearing in contact with the panel holder 12, the base 30 being arranged around the panel information device 14.

The invention is not limited to a unique display 15 as a panel information device 14. The panel information device 14 may comprise a display 15 and other equipment as analog speedometer for instance.

In order to damp shocks from exterior events on the transparent lens 16 for avoiding damages on the panel information device 14 and more particularly damages on a display 15 of the panel information device 14, the top axial end of the lens retainer 18 comprises an elastic member 32. The elastic member 32 is arranged in a vertical elastic configuration such that a vertical motion of the transparent lens 16 is damped while a shock arises on the transparent lens 16.

The elastic member 32 comprises a foam gasket 34 fastened on the top axial end 22 of the tubular part 26 of the lens retainer 18, said elastic member 32 being arranged between the lens retainer 18 and the transparent lens 16 such that foam gasket 34 is arranged in direct contact bearing engagement with the rear surface 20 of the transparent lens 16.

According to figure 3, the lens retainer 32 of the instrument panel assembly 10 is shown according to a second embodiment of the elastic member 32. The foam gasket 34 is arranged on the bottom axial end 24 of the lens retainer 18. More particularly, the foam gasket 34 is arranged on the bottom face 31 of the base 30 of the lens retainer 18 such that, when the lens retainer 18 is assembled with the panel holder 12, the foam gasket 34 is arranged in bearing engagement with the panel holder 12.

More generally, the elastic member 32 may comprise any kind of gasket with elastic properties. In addition to its damping effect, the gasket is also providing protection against dust and/or water on the panel information device. The gasket is arranged at the top axial end 22 of the lens retainer 18 in bearing contact with the transparent lens 16 and/or at the bottom axial end 24 of the lens retainer 18 in bearing contact with the panel holder 12. As an example, the elastic member 32 may comprise an elastomer gasket that may be over molded with the lens retainer 18.

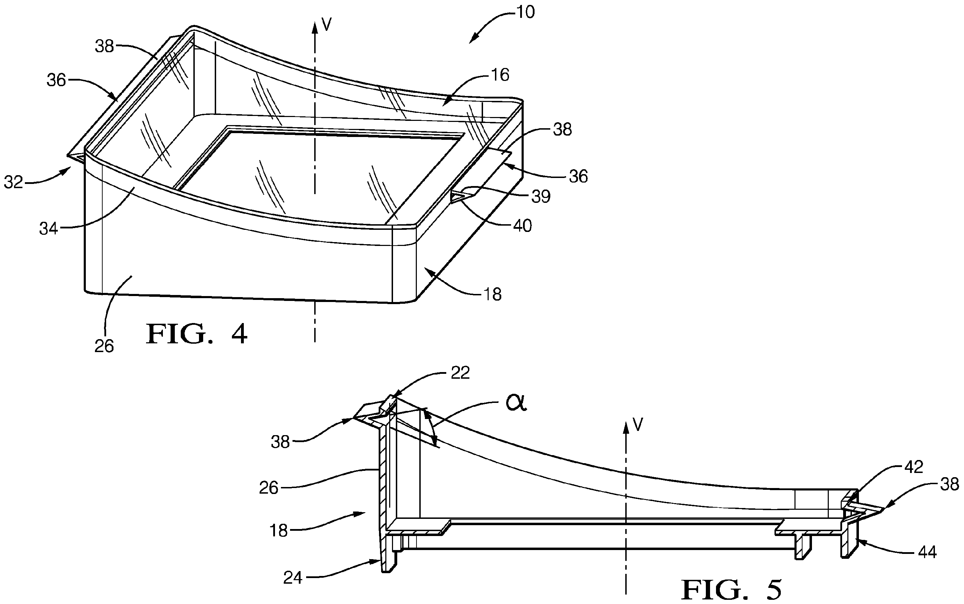

According to figure 4 and figure 5, a third embodiment of instrument panel assembly 10 is shown. More particularly, an alternative of the elastic member 32 is shown. The elastic member 32 comprises a part arranged integral with the lens retainer 18. The elastic member 32 comprises an elastic shape 36 made in one piece with the lens retainer 18. The elastic shape 36 is a folding of the wall of the tubular part 26 of the lens retainer 18. The elastic shape 36 provides a vertical elasticity of the wall such that the folding of the wall extends transversally to the vertical axis V. As a non-limiting example, the folding has a profile in axial cross section 'V' shape rotated of ninety degree. In other words, the folding of the wall, called the 'V' shape elastic member 38, is arranged integral to the lens retainer 18 such that it provides vertical elasticity to the lens retainer 18. The 'V' shape elastic member 38 arranged on the wall of the tubular part 26 of the retainer 32 is configured to damp vertical motion of the transparent lens 16 while shocks occurs on the transparent lens 16 by an reduction of the angle α between the two branches 39, 40 of the 'V' shape elastic member.

The 'V' shape elastic member 38 may be arranged between the axial ends 22, 24 of the lens retainer 18 so that the lens retainer18 is divided into a first portion 42 and a second portion 44 on respective opposite sides of the elastic member 32, the first portion extending vertically to the top axial end 22 of the lens retainer 18 bearing the rear surface 20 of the transparent lens 16, the second portion 44 extending vertically to the bottom axial end 24 of the lens retainer 18.

According to figure 4 and figure 5, a part of the edges of the transparent lens 16 is arranged in bearing engagement with a part of the wall of the tubular part 26 comprising the 'V' shape elastic member 38, the rest of the part of the edges of the transparent lens 16 is arranged in bearing engagement with a foam gasket 34 arranged at the top axial end 22 of the lens retainer 18.

More generally, the elastic member 32 may comprise a plurality of kinds of resilient member and may be arranged on the lens retainer 18 at different location between the transparent lens 16 and the panel holder 12.

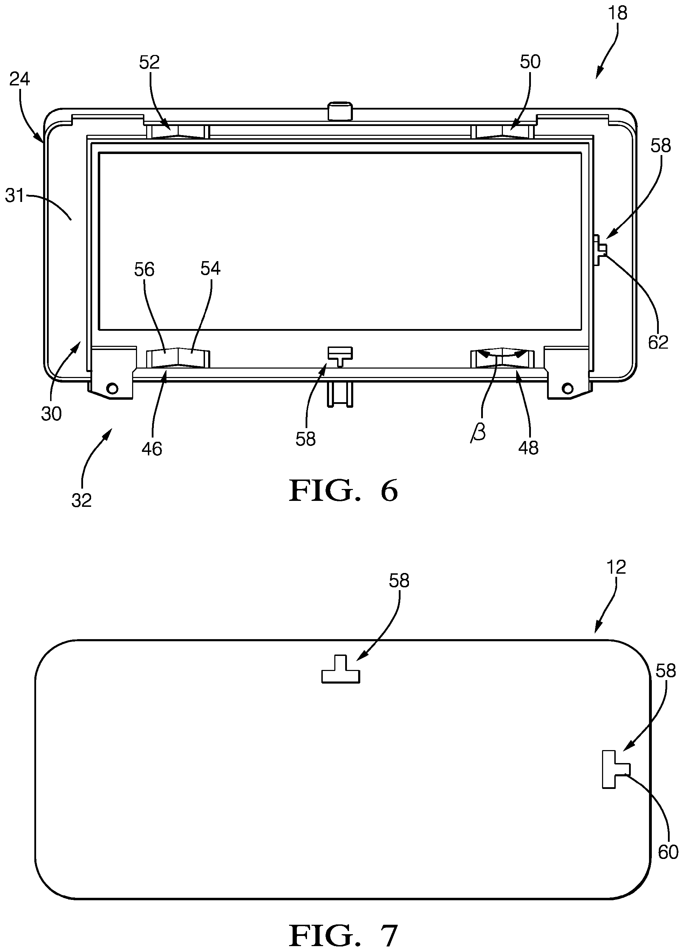

According to figure 6, a fourth embodiment of instrument panel assembly 10 is shown. More particularly, an alternative of the elastic member 32 is shown. The bottom axial end 24 of the lens retainer 18 comprises few elastic shape elements integral with the bottom face 31 of the base 30 of the lens retainer 18. More particularly, the elastic member 32 comprises four 'V' shape elastic individual elements 46, 48, 50, 52 arranged on the bottom face 31 of the base 30 of the lens retainer 18. Each 'V' shape elastic element 46, 48, 50, 52 is arranged vertically inverted such that, the base of the 'V', i.e. the tip of the 'V' is directly arranged on the bottom face 31 of the base 30 of the lens retainer 18 and the free end extremity of each branch 54, 56 of the 'V' is configured to be arranged in bearing contact with the panel holder 12. Each 'V' shape elastic element 46, 48, 50, 52 arranged on the bottom surface 31 of the base 30 of the lens retainer 18 is configured to damp vertical motion by an expansion of the angle β between the two branches 54, 56 of the 'V' shape elastic element while shocks occurs on the transparent lens 16. A sliding zone for the free end extremity of each branch 54, 56 of each 'V' shape elastic element 46, 48, 50, 52 is arranged on the panel holder 12 such that the free end extremity of each branch 54, 56 of each 'V' shape elastic element 46, 48, 50, 52 may move away transversely from each other during shock on the transparent lens 16 and then move back in initial position after the shock.

According to figure 6 and figure 7, the bottom axial end 24 of the lens retainer 18 and the panel holder 12 jointly comprise vertical sliding guiding means 58 so as to ensure only a vertical motion of the lens retainer 18 during shocks absorption on the transparent lens 16. More particularly, the panel holder 12 comprises T-shape openings 60 that cooperate with vertical T-shape guiding pins 62 arranged on the bottom side 31 of the base 30 of the lens retainer 18. The T-shape guiding pins 62 are configured to be partially arranged inside the T-shape openings 60 such that said T-shape guiding pins can slide through the T-shape openings 60 during vertical motion of the transparent lens 16. In other words, during vertical damping of shocks on the transparent lens 16, only vertical motion of the lens retainer 18 is guarantee. In other words, the vertical sliding guiding means 58 prevent transversal and/or horizontal motion of the lens retainer 18 during motion of the transparent lens 16 due to shocks on the transparent lens 16.

## Claims

1. An instrument panel assembly (10) for displaying vehicle information, said assembly (10) comprises:
a panel holder (12);
a panel information device (14) mounted on the panel holder (12);
a transparent lens (16) overlaying the panel information device (14);
a plastic lens retainer (18) extending along a vertical axis (V) from the rear surface (20) of the transparent lens (16) to the panel holder (12) such that the transparent lens (16) is retained distant from the panel information device (14);
at least one elastic member (32) arranged in contact with the lens retainer (18) and arranged in a vertical elastic configuration between the transparent lens (16) and the panel holder (12) so as to damp shocks on the transparent lens (16);
**characterized in that**
the lens retainer (18) comprises a 'V' shape elastic member (32) that is a folding of the lens retainer arranged between the axial ends (22, 24) of the lens retainer (18) so that the lens retainer (18) is divided into a first portion (42) and a second portion (44) on respective opposite sides of the elastic member (32), the first portion (42) extending vertically to the top axial end (22) of the lens retainer (18) in bearing contact with the rear surface (20) of the transparent lens (16), the second portion (44) extending vertically to the bottom axial end (24) of the lens retainer (18).

2. Assembly (10) according to claim 1 **characterized in that** the lens retainer (18) comprises the elastic member (32) arranged in direct contact bearing engagement with the rear surface (20) of the transparent lens (16).

3. Assembly (10) according to any one of the preceding claims **characterized in that** the lens retainer (18) comprises the elastic member (32) arranged in bearing engagement with the panel holder (12).

4. Assembly (10) according to any one of the preceding claims **characterized in that** the elastic member (32) comprises an elastic shape made in one piece with the lens retainer (18).

5. Assembly according to any one of the preceding claims **characterized in that** the elastic member (32) comprises a foam gasket (34) glued with the lens retainer (18).

6. Assembly (10) according to any one of the preceding claims **characterized in that** the elastic member (32) comprises an elastomer gasket.

7. Assembly (10) according to any one of the preceding claims **characterized in that** the bottom axial end (24) of the lens retainer (18) and the panel holder (12) jointly comprise vertical sliding guiding means (58) so as to ensure only a vertical motion of the lens retainer (18) during shocks absorption on the transparent lens (16).

## Patentansprüche

1. Instrumententafelanordnung (10) zum Anzeigen von Fahrzeuginformationen, wobei die Anordnung (10) Folgendes umfasst:
einen Tafelhalter (12);
eine Tafelinformationsvorrichtung (14), die am Tafelhalter (12) montiert ist;
eine transparente Linse (16), die die Tafelinformationsvorrichtung (14) überlagert;
eine Kunststofflinsenhalterung (18), die sich von der Rückfläche (20) der transparenten Linse (16) entlang einer vertikalen Achse (V) zum Tafelhalter (12) erstreckt, derart, dass die transparente Linse (16) von der Tafelinformationsvorrichtung (14) entfernt gehalten wird;
mindestens ein elastisches Element (32), das mit der Linsenhalterung (18) in Kontakt angeordnet ist und in einer vertikalen elastischen Auslegung zwischen der transparenten Linse (16) und dem Tafelhalter (12) angeordnet ist, um Stöße gegen die transparente Linse (16) zu dämpfen;
**dadurch gekennzeichnet, dass**
die Linsenhalterung (18) ein "V"-förmiges elastisches Element (32) umfasst, das eine Faltung der Linsenhalterung ist, die zwischen den axialen Enden (22, 24) der Linsenhalterung (18) angeordnet ist, derart, dass die Linsenhalterung (18) in einen ersten Abschnitt (42) und einen zweiten Abschnitt (44) auf jeweiligen gegenüberliegenden Seiten des elastischen Elements (32) geteilt ist, wobei sich der erste Abschnitt (42) vertikal zum oberen axialen Ende (22) der Linsenhalterung (18) in Lagerkontakt mit der Rückfläche (20) der transparenten Linse (16) erstreckt, wobei sich der zweite Abschnitt (44) vertikal zum unteren axialen Ende (24) der Linsenhalterung (18) erstreckt.

2. Anordnung (10) nach Anspruch 1, **dadurch gekennzeichnet, dass** die Linsenhalterung (18) das elastische Element (32) umfasst, das in direktem Kontaktlagereingriff mit der Rückfläche (20) der transparenten Linse (16) angeordnet ist.

3. Anordnung (10) nach einem der vorhergehenden Ansprüche, **dadurch gekennzeichnet, dass** die Linsenhalterung (18) das elastische Element (32) umfasst, das im Lagereingriff mit dem Tafelhalter (12) angeordnet ist.

4. Anordnung (10) nach einem der vorhergehenden Ansprüche, **dadurch gekennzeichnet, dass** das elastische Element (32) eine elastische Form umfasst, die mit der Linsenhalterung (18) aus einem Stück gefertigt ist.

5. Anordnung nach einem der vorhergehenden Ansprüche, **dadurch gekennzeichnet, dass** das elastische Element (32) eine Schaumdichtung (34) umfasst, die an die Linsenhalterung (18) geklebt ist.

6. Anordnung (10) nach einem der vorhergehenden Ansprüche, **dadurch gekennzeichnet, dass** das elastische Element (32) eine Elastomerdichtung umfasst.

7. Anordnung (10) nach einem der vorhergehenden Ansprüche, **dadurch gekennzeichnet, dass** das untere axiale Ende (24) der Linsenhalterung (18) und der Tafelhalter (12) gemeinsam vertikale Gleitführungsmittel (58) umfassen, damit während der Absorption von Stößen gegen die transparente Linse (16) nur eine vertikale Bewegung der Linsenhalterung (18) sichergestellt ist.

## Revendications

1. Ensemble de tableau de bord (10) pour afficher des informations de véhicule, ledit ensemble (10) comprenant :
un support de tableau de bord (12) ;
un dispositif d'information de tableau de bord (14) monté sur le support de tableau de bord (12) ;
un verre transparent (16) recouvrant le dispositif d'information de tableau de bord (14) ;
un dispositif de retenue de verre en plastique (18) s'étendant le long d'un axe vertical (V) de la surface arrière (20) du verre transparent (16) au support de tableau de bord (12) de sorte que le verre transparent (16) est retenu à distance du dispositif d'information de tableau de bord (14) ;
au moins un élément élastique (32) agencé en contact avec le dispositif de retenue de verre (18) et agencé dans une configuration élastique verticale entre le verre transparent (16) et le support de tableau de bord (12) afin d'amortir les chocs sur le verre transparent (16) ;
**caractérisé en ce que** :
le dispositif de retenue de verre (18) comprend un élément élastique en forme de « V » (32) qui est un pliage du dispositif de retenue de verre agencé entre les extrémités axiales (22, 24) du dispositif de retenue de verre (18) de sorte que le dispositif de retenue de verre (18) est divisé en une première partie (42) et en une seconde partie (44) sur les côtés opposés respectifs de l'élément élastique (32), la première partie (42) s'étendant verticalement vers l'extrémité axiale supérieure (22) du dispositif de retenue de verre (18) en contact d'appui avec la surface arrière (20) du verre transparent (16), la seconde partie (44) s'étendant verticalement vers l'extrémité axiale du fond (24) du dispositif de retenue de verre (18).

2. Ensemble (10) selon la revendication 1, **caractérisée en ce que** le dispositif de retenue de verre (18) comprend l'élément élastique (32) agencé en mise en prise d'appui par contact direct avec la surface arrière (20) du verre transparent (16) .

3. Ensemble (10) selon l'une quelconque des revendications précédentes, **caractérisé en ce que** le dispositif de retenue de verre (18) comprend l'élément élastique (32) agencé en mise en prise d'appui avec le support de tableau de bord (12).

4. Ensemble (10) selon l'une quelconque des revendications précédentes, **caractérisé en ce que** l'élément élastique (32) comprend une forme élastique réalisée d'un seul tenant avec le dispositif de retenue de verre (18).

5. Ensemble selon l'une quelconque des revendications précédentes, **caractérisé en ce que** l'élément élastique (32) comprend un joint en mousse (34) collé avec le dispositif de retenue de verre (18).

6. Ensemble (10) selon l'une quelconque des revendications précédentes, **caractérisé en ce que** l'élément élastique (32) comprend un joint élastomère.

7. Ensemble (10) selon l'une quelconque des revendications précédentes, **caractérisé en ce que** l'extrémité axiale inférieure (24) du dispositif de retenue de verre (18) et le support de tableau de bord (12) comprennent conjointement un moyen de guidage de coulissement vertical (58) afin de ne garantir qu'un mouvement vertical du dispositif de retenue de verre (18) pendant l'absorption de chocs sur le verre transparent (16).
